# DEMANDE DE BREVET EUROPEEN

(11) **EP 1 126 571 A1**
(43) Date de publication de la demande: **22.08.2001**
(21) Numéro de dépôt: 01400376.8
(22) Date de dépôt: 13.02.2001
(51) Int. Cl.: H02G 3/32, F16L 3/13

(54) **Système d'attache orientable et modulaire pour câbles**

(30) Priorité: 18.02.2000 FR 0002030
(71) Demandeur: PLOMBELEC, 45130 Meung-sur-Loire (FR)
(72) Inventeur: Barboux, Hervé, 45370 Dry (FR)
(74) Mandataire: Debay, Yves

(57) **Abrégé**

La présente invention concerne un système d'attache modulaire et orientable pour câbles caractérisé en ce qu'il comprend un corps d'attache (1) monobloc plastique muni d'au moins un crochet (3) élastique assurant le maintien par clipsage du câble, le corps d'attache (1) étant percé d'au moins un trou taraudé (2).

## Description

L'invention concerne un système d'attache orientable et modulaire pour tube, câble et gaine électrique utilisable sur dalle, mur ou plafond. L'attache présente la particularité d'être orientable par rapport au support d'attache, vers l'intérieur ou vers l'extérieur. L'attache présente l'autre particularité d'être superposable à l'infini.

Il est connu dans l'art antérieur de NL C 1001624 un système d'attache pour câble. Ce système d'attache monobloc solidaire de sa cheville n'est ni orientable, ni modulaire, ni démontable. Par ailleurs, avec ce système d'attache, l'ouverture des crochets est toujours orientée vers la cheville. Il est également connu de FR 2 770 609 un système d'attache monobloc, solidaire de sa cheville, qui n'est ni modulaire, ni orientable, ni démontable. De même avec ce système d'attache, l'ouverture du crochet est toujours orientée vers la cheville.

Il peut être utile pour des utilisateurs de fixer des câbles, gaines, tubes le long d'un support tel un mur, une dalle ou un plafond. L'invention propose une attache qui permet des montages provisoires ou définitifs, mais toujours orientables et/ou superposables et démontables. Dans le sens orienté vers l'extérieur du support, l'attache permet la fixation par clipsage. Dans le sens orienté vers l'intérieur, l'attache permet la fixation du câble par clipsage mais également en l'enserrant contre le support. Le système d'attache présente l'autre particularité de pouvoir se fixer sur des supports de fixation existants, ce qui permet d'utiliser ces supports de fixation existants sans avoir à les retirer pour utiliser le système d'attache. Un avantage que procure l'invention est par ailleurs de pouvoir démonter le corps d'attache tout en laissant en place une pièce de fixation dans le support. Un autre avantage que procure l'invention est de pouvoir être soumis à une frappe comme celle d'un marteau par exemple.

Le système d'attache selon l'invention est composé d'un corps d'attache pourvu sur une partie de sa hauteur et selon deux faces opposées d'un perçage taraudé.

Selon un aspect de l'invention, le corps d'attache est muni d'un seul trou taraudé borgne.

Selon un autre aspect de l'invention, le corps d'attache est muni de deux trous taraudés borgnes. Le corps d'attache monobloc plastique est également pourvu de crochet.

Dans une première variante de réalisation, le corps d'attache est muni d'un unique crochet.

Dans une seconde variante de réalisation, le corps d'attache est muni de deux crochets.

Dans un aspect, l'invention est composée également de raccords de jonction présentant deux extrémités filetées d'un diamètre égal au diamètre du perçage taraudé. Un premier type de raccord de jonction présente les deux extrémités filetées à pas de vis identique et de même sens. Un second type de raccord présente une première extrémité filetée séparée par une collerette d'une seconde extrémité de fixation en force formant cheville.

Le principe d'utilisation de l'attache est simple. Une pièce de fixation est fixée dans le support. Cette pièce de fixation est filetée selon une de ses extrémités selon un filetage de diamètre égal à celui du trou taraudé dans le corps d'attache. Son autre extrémité est adaptée au support et aux sollicitations mécaniques qu'elle doit supporter. Cette extrémité peut être une patte à vis bois, une patte à vis métaux, une cheville ou une tige filetée ou des rondelles élastiques disposées régulièrement sur un axe. L'utilisateur fixe la pièce de fixation dans le support. Il visse ensuite le corps d'attache par son trou taraudé à la pièce de fixation. Il peut choisir d'orienter le corps d'attache en présentant les crochets ouverts vers l'extérieur du support ou en présentant les crochets ouverts vers le support. Si l'utilisateur désire disposer de plusieurs crochets d'attache dans un nombre supérieur à deux, il utilise alors la pièce de raccord. Cette pièce de raccord est filetée selon ses deux extrémités à un diamètre égal à celui du trou taraudé dans le corps d'attache. La pièce de raccord présente par ailleurs en son milieu un anneau en saillie qui bloque en longueur de vissage la pièce de raccord dans le corps d'attache. Il existe deux types de pièce de raccord. Un premier type de pièce de raccord présente des pas de vis inversés à chacune de ses extrémités. Un second type de pièce de raccord présente des pas de vis identique à chacune de ses extrémités. L'utilisateur visse alors la pièce de raccord sur le support d'attache. Il peut ensuite visser un nouveau corps d'attache sur l'autre extrémité de la pièce de raccord. En utilisant le premier type de pièce de raccord, l'utilisateur superposera des corps d'attache présentant des crochets ouverts dans le même sens. En utilisant le second type de pièce de raccord, l'utilisateur superposera des corps d'attache présentant des crochets ouverts dans des sens opposés. Dans le cas où l'utilisateur dispose de deux corps d'attaches munis de deux crochets il peut alors faire passer quatre câbles. L'utilisateur peut répéter l'opération afin de disposer de plus de crochets pour y accrocher tous les câbles qu'il souhaite. Par ailleurs, le corps d'attache présente, selon deux de ses faces opposées et perpendiculaires à l'axe du perçage taraudé, des surfaces planes, ce qui permet au système d'attache de subir des frappes, comme celle d'un marteau par exemple.

D'autres particularités et avantages de la présente invention apparaîtront plus clairement à la lecture de la description ci-après faite en référence aux dessins annexés dans lesquels :
la figure 1 représente une vue de face du système d'attache avec deux crochets orientés vers l'extérieur du support ;
la figure 2 représente une vue de face du système d'attache avec un crochet orienté vers l'extérieur du support ;
la figure 3 représente une vue de face du système d'attache avec deux crochets orientés vers l'intérieur du support ;
la figure 4 représente une vue de face du système d'attache avec deux corps d'attache composés de deux crochets superposés et orientés vers l'extérieur du support ;
la figure 5 représente une vue de face du système d'attache avec un corps d'attache composé d'un crochet orienté vers le support ;
la figure 6 représente une vue de côté du système d'attache avec un corps d'attache muni de deux crochets et un corps d'attache muni d'un crochet ouvert vers l'extérieur du support ;
la figure 7 représente une vue de côté du système d'attache avec trois corps d'attache superposés et orientés vers le support. Sur la figure 7 figure également une coupe partielle d'un corps d'attache.

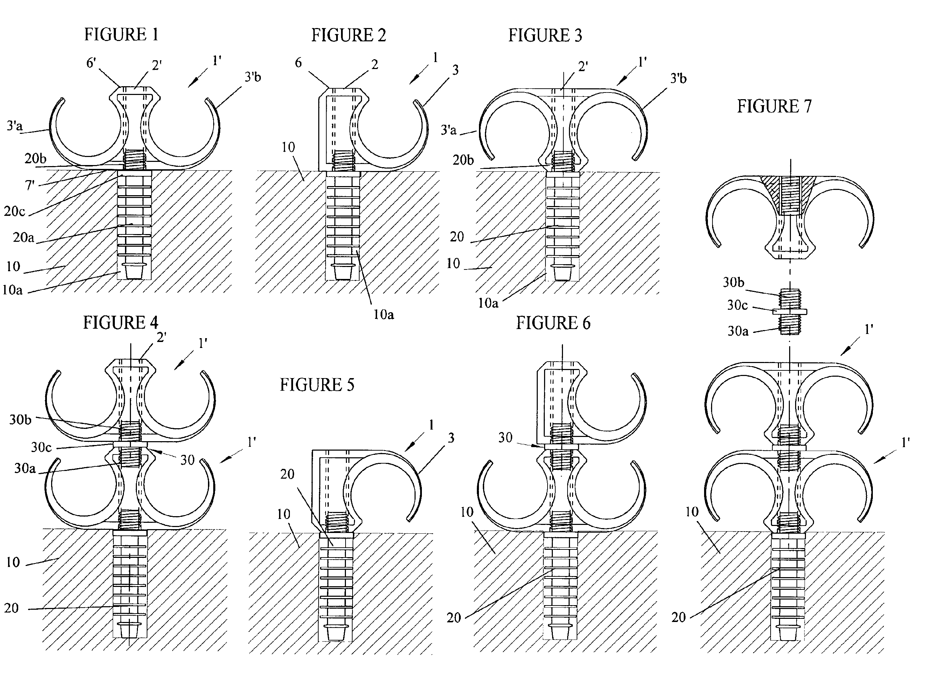

La figure 1 représente un corps d'attache (1') muni de deux crochets (3'a, 3'b). Les crochets constituent une forme générale cylindrique, ouverte sur une partie de façon à pouvoir introduire ou retirer un câble, un tube ou un tuyau. De par leur structure ouverte et de par leur fabrication en plastique, ces crochets présentent une certaine élasticité et permettent ainsi de pouvoir y introduire des câbles présentant des diamètres différents. La forme cylindrique des crochets est ouverte sur environ un cinquième de sa surface. La hauteur du crochet n'est pas inférieure à plus de trois quarts de la hauteur du corps d'attache, mais la hauteur des crochets doit en tout état de cause être inférieure à la hauteur du corps d'attache. Pour des raisons d'élasticité, l'épaisseur de ce crochet peut être décroissante. Pour assurer le maintien du câble, il est bien évident que le diamètre de celui-ci doit sensiblement correspondre au diamètre du crochet. Le corps d'attache présente par ailleurs, sur toute sa hauteur, un perçage taraudé (2'). Ce perçage taraudé traverse la pièce de part en part. Des deux côtés de la pièce sur lesquels ce perçage débouche, la pièce présente une première surface plane (6') du côté des ouvertures des crochets et une seconde surface plane (7') du côté de la jonction du crochetage avec le corps de l'attache. La première surface plane (6') sera en contact avec la rondelle en saillie (20c) d'une pièce de fixation (20) sur le support (10) si le corps d'attache est fixé comme représenté figure 3 avec les crochets orientés vers le support. La surface plane (7') sera en contact avec la rondelle en saillie (20c) de la pièce de fixation sur le support si le corps d'attache est fixé comme représenté figure 1 avec les crochets orientés vers l'extérieur du support. La pièce de fixation (20) est fixée dans une cavité (10a) d'un support (10). Cette pièce de fixation (20) présente deux extrémités (20a, 20b), elle est filetée selon une de ses extrémités (20b). Les deux extrémités sont séparées par une rondelle en saillie (20c). L'extrémité (20a) composée de rondelles élastiques disposées à intervalles réguliers sur un axe est destinée à s'introduire dans la cavité (10a) du support (10) et est dimensionnée de façon à assurer la bonne tenue dans le support (10) de la pièce de fixation malgré les sollicitations mécaniques exercées sur le système d'attache. Le filetage (20b) est destiné à se visser sur le trou taraudé (2') du corps d'attache (1').

La figure 2 représente une variante du corps d'attache (1) munie d'un seul crochet d'attache (3). Le crochet est identique dans sa forme et sa réalisation au corps d'attache à double crochet. De même, la pièce de fixation (20) est en tout point identique dans sa forme et sa réalisation à la pièce de fixation (20) décrite en figure 1. Comme dans la variante précédente, la pièce de fixation peut se réaliser en un matériau métallique ou plastique.

La figure 3 représente, vu de face, le système d'attache muni d'un corps d'attache (1') avec deux crochets (3'a, 3'b) orientés vers l'intérieur du support. Le corps d'attache (1') est fixé au support par la pièce de fixation (20) qui est elle même fixée dans le perçage (10a) du support (10). Le pas de vis (20b) de l'extrémité filetée de la pièce de fixation (20) est de même sens que le taraudage du trou (2) du corps d'attache.

La figure 4 représente, vu de face, le système d'attache avec deux corps d'attache identiques composés de deux crochets superposés et en position orientée vers l'extérieur du support. Les deux corps d'attache sont reliés par une pièce de raccord (30). Cette pièce de raccord (30) est munie de deux extrémités filetées (30a, 30b). Les pas de vis de ces deux extrémités sont de même sens. Ces deux extrémités se joignent en une rondelle en saillie (30c). Le diamètre des deux extrémités filetés (30a, 30b) est égal à celui du trou taraudé (2') du corps d'attache (1'). Un corps d'attache (1') est fixé au support (10) par la pièce de fixation (20).

La figure 5 représente, vu de face, le système d'attache avec un corps d'attache (1) composé d'un crochet (3) orienté vers le support. Ce corps d'attache est fixé au support (10) par une pièce de fixation (20).

La figure 6 représente, vu de côté, le système d'attache avec un corps d'attache (1') muni de deux crochets et un corps d'attache (1) muni d'un crochet ouvert vers l'extérieur du support. Les corps d'attache (1) et (1') sont reliés entre eux par une pièce de raccord (30) identique à celle de la figure 4. Le corps d'attache (1) est fixé au support (10) par une pièce de fixation (20).

La figure 7 représente, vu de côté, le système d'attache avec trois corps d'attache (1') superposés et orientés vers le support. Les corps d'attache sont reliés entre eux par des pièces de raccord (30). Le corps d'attache le plus à proximité du support est relié au support (10) par une pièce de fixation (20). Sur la figure 7 figure également une coupe partielle d'un corps d'attache (1').

L'invention concerne donc un système d'attache modulaire et orientable pour câbles caractérisé en ce qu'il comprend un corps d'attache (1) monobloc plastique muni d'au moins un crochet (3) élastique assurant le maintien par clipsage du câble, le corps d'attache (1) étant percé d'au moins un trou taraudé (2).

Dans un autre mode de réalisation, le système d'attache modulaire et orientable pour câbles se caractérise en ce que le système comprend également au moins une pièce de fixation (20) présentant deux extrémités (20a, 20b) qui se rejoignent selon une rondelle en saillie (20c), l'extrémité filetée de jonction (20b) présente un diamètre et un pas de filetage égal et de même sens que celui du trou taraudé (2), l'extrémité (20a) de fixation se fixe en force dans la cavité (10a) du support (10).

Dans un autre mode de réalisation, le système d'attache modulaire et orientable pour câbles se caractérise en ce que le système d'attache comprend également au moins une pièce de raccord (30) présentant deux extrémités filetées (30a,30b) de diamètre et de pas égal au diamètre du perçage taraudé (2) et à pas de vis de même sens, les extrémités se rejoignent selon une rondelle en saillie (30c).

Dans un autre mode de réalisation, le système d'attache modulaire et orientable pour câbles se caractérise en ce qu'il comprend au moins un corps d'attache (1) muni d'un trou taraudé (2), une pièce de fixation (20) munie d'une extrémité filetée de jonction (20b), une pièce de raccord (30) munie de deux extrémités (30a, 30b), une pièce de raccord (30') munie de deux extrémités filetées (30'a, 30'b) et en ce que les diamètres du trou taraudé (2), du trou taraudé (2'), de l'extrémité filetée de jonction (20b) de la pièce de fixation (20), des deux extrémités filetées (30a, 30b) de la pièce de raccord (30), des deux extrémités (30'a, 30'b) de la pièce de raccord (30') sont égaux

Dans un autre mode de réalisation, le système d'attache modulaire et orientable se caractérise en ce que le corps d'attache (1) est muni d'un trou taraudé borgne.

Dans un autre mode de réalisation le système d'attache modulaire et orientable se caractérise en ce que le corps d'attache (1) est muni de deux trous taraudés borgnes.

Dans un autre mode de réalisation, le système d'attache orientable et modulaire se caractérise en ce que la paroi interne des crochets (3) présente une surface cylindrique ouverte sur environ un cinquième de la surface correspondante de cylindre.

Dans un autre mode de réalisation, le système d'attache modulaire et orientable se caractérise en ce que le diamètre des crochets (3) est supérieur à trois quarts de la hauteur du corps d'attache (1).

Dans un autre mode de réalisation, le système d'attache modulaire et orientable se caractérise en ce que le corps d'attache (1) comporte deux surfaces planes (6,7) parallèles et perpendiculaires à l'axe du trou taraudé, ces surfaces planes pouvant servir de surface de contact avec le support de fixation ou de surface de frappe avec un instrument comme un marteau.

Dans un autre mode de réalisation, le système d'attache se caractérise en ce que le crochet (3) est ouvert selon un plan sensiblement parallèle aux surfaces planes (6,7).

D'autres modifications à la portée de l'homme de métier font également partie de l'esprit de l'invention.

## Revendications

1. Système d'attache modulaire et orientable pour câbles caractérisé en ce qu'il comprend un corps d'attache (1) monobloc plastique muni d'au moins un crochet (3) élastique assurant le maintien par clipsage du câble, le corps d'attache (1) étant percé d'au moins un trou taraudé (2).

2. Système d'attache modulaire et orientable pour câbles selon la revendication 1, caractérisé en ce que le système comprend également au moins une pièce de fixation (20) présentant deux extrémités (20a, 20b) qui se rejoignent selon une rondelle en saillie (20c), l'extrémité filetée de jonction (20b) présente un diamètre et un pas de filetage égal et de même sens que celui du trou taraudé (2), l'extrémité (20a) de fixation se fixe en force dans la cavité (10a) du support (10).

3. Système d'attache modulaire et orientable pour câbles selon la revendication 1, caractérisé en ce que le système d'attache comprend également au moins une pièce de raccord (30) présentant deux extrémités filetées (30a, 30b) de diamètre et de pas égal au diamètre du perçage taraudé (2) et à pas de vis de même sens, les extrémités se rejoignent selon une rondelle en saillie (30c).

4. Système d'attache modulaire et orientable pour câbles selon les revendications 1, 2, 3, caractérisé en ce qu'il comprend au moins un corps d'attache (1) muni d'un trou taraudé (2), une pièce de fixation (20) munie d'une extrémité filetée de jonction (20b), une pièce de raccord (30) munie de deux extrémités (30a, 30b), une pièce de raccord (30') munie de deux extrémités filetées (30'a, 30'b) et en ce que les diamètres du trou taraudé (2), du trou taraudé (2'), de l'extrémité filetée de jonction (20b) de la pièce de fixation (20), des deux extrémités filetées (30a, 30b) de la pièce de raccord (30), des deux extrémités (30'a, 30'b) de la pièce de raccord (30') sont égaux

5. Système d'attache modulaire et orientable selon la revendication 1, caractérisé en ce que le corps d'attache (1) est muni d'un trou taraudé borgne.

6. Système d'attache modulaire et orientable selon la revendication 1, caractérisé en ce que le corps d'attache (1) est muni de deux trous taraudés borgnes.

7. Système d'attache orientable et modulaire selon la revendication 1, caractérisé en ce que la paroi interne des crochets (3) présente une surface cylindrique ouverte sur environ un cinquième de la surface correspondante de cylindre.

8. Système d'attache modulaire et orientable selon la revendication 1, caractérisé en ce que le diamètre des crochets (3) est supérieur à trois quarts de la hauteur du corps d'attache (1).

9. Système d'attache modulaire et orientable selon la revendication 1, caractérisé en ce que le corps d'attache (1) comporte deux surfaces planes (6,7) parallèles et perpendiculaires à l'axe du trou taraudé, ces surfaces planes pouvant servir de surface de contact avec le support de fixation ou de surface de frappe avec un instrument comme un marteau.

10. Système d'attache selon la revendication 9, caractérisé en ce que le crochet (3) est ouvert selon un plan sensiblement parallèle aux surfaces planes (6,7).
